# EUROPEAN PATENT SPECIFICATION

(11) **EP 2 620 750 B1**
(45) Date of publication and mention of the grant of the patent: **06.11.2024**
(21) Application number: 13151681.7
(22) Date of filing: 17.01.2013
(51) Int. Cl.: G01C 21/34

(54) **Apparatus and method for generating a path**
Vorrichtung und Verfahren zur Erzeugung eines Pfads
Appareil et procédé pour générer un chemin

(30) Priority: 26.01.2012 US 201261591221 P
(43) Date of publication of application: 31.07.2013
(73) Proprietor: HYUNDAI MOTOR COMPANY, Seoul 137-938 (KR)
(72) Inventor: Park, Cheol Woo, 138-751 Seoul (KR); Kwon, Soon Sung, 431-904 Anyang-si (KR)
(74) Representative: Isarpatent

(56) References cited:
- EP-A1- 1 669 719
- US-A1- 2011 093 188
- US-A1- 2012 016 576

## Description

The present invention relates to an apparatus and a method for generating a path.

US 2011/093188A1 discloses a path generating method, wherein a path from a origin to a destination is divided into a plurality of segments, each segment being a sub-route, wherein route results generate according to defined scoring basis to a user are generated, thereby allowing the user to select his/her desired path. The scoring basis selected by a user corresponds to a shortest path or a shortest amount of time for each section.

US 2012/016576A1 discloses a path generating apparatus wherein various paths from an origin to a destination are provided to a user by categorizing the path according to the shortest amount of time, fuel efficiency and the like.

### FIELD OF THE INVENTION

The present invention relates to an apparatus and method for generating a path (*e.g.,* a space of interest path), and more particularly, to a method of providing a theme of use and recommended paths for each section corresponding to the theme of use based on at least one path matched to each arbitrarily set section to allow them to be selected. A space of interest (SOI) refers to a collection of data about a space of people's interest or use. An SOI is made up of point, line and/or plane and has a unique identifying data.

Here, the SOI indicating a path between a start point and an arrival point of an arbitrarily set section ("path SOI"), includes a path SOI that does not include information on a relationship with a content as well as a path SOI that includes the information on a relationship with contents. Here, the content has a form in which a text, an image, a moving picture, and the like, are provided, respectively, or are combined with each other.

### BACKGROUND OF THE INVENTION

In general, when a path generating system receives an origination and a destination from a user, it searches for path data stored in a database to extract path data from the origination to the destination. In this case, the path generating system extracts path data according to the shortest path or the shortest time.

### SUMMARY OF THE INVENTION

Accordingly, the present invention has been made to solve the above-mentioned problems occurring in the prior art while advantages achieved by the prior art are maintained intact.

An object to be achieved by the present invention is to provide an SOI-based path generating apparatus and method capable of allowing a user to select paths for each section in his/her desired theme by including a database storing at least one path SOI for each arbitrarily set section and providing at least one recommended path for each theme and each section corresponding to each theme.

That is, an object to be achieved by the present invention is to provide an SOI-based path generating apparatus and method capable of allowing a user to select paths for each section in his/her desired theme by setting a main path corresponding to an origination and a destination input from the user and providing at least one recommended path for each section corresponding to a specific theme in the case in which the user selects the specific theme.

In one aspect of the present invention, it is provided path generating apparatus as defined in independent claim 11.

In another aspect of the present invention, it is provided a path generating method as defined in independent claim 1.

### BRIEF DESCRIPTION OF THE DRAWINGS

The above and other objects, features and advantages of the present invention will be more apparent from the following detailed description taken in conjunction with the accompanying drawings, in which:
FIG. 1 is a configuration diagram of an SOI-based path generating apparatus according to an exemplary embodiment of the present invention;
FIG. 2 is a configuration diagram of an SOI information generating apparatus according to an exemplary embodiment of the present invention;
FIG. 3 is a flow chart of an SOI-based path generating method according to an exemplary embodiment of the present invention;
FIGS. 4A-4C depicts a sample user interface according to an exemplary embodiment of the present invention;
FIG. 5 depicts the presentation of one or more recommended path segments for a single path segment according to an exemplary embodiment of the present invention; and
FIG. 6 depicts the extension of a recommend path segment to reach one or more path segments along the main path according to an exemplary embodiment of the present invention.

### DETAILED DESCRIPTION OF THE PREFERRED EMBODIMENTS

The path generating system according to the related art does not provide a recommended path associated with the path from the origination to the destination received from the user in setting a path using path data based on a node or a link and providing recommended paths for each theme. That is, the path generating system according to the related art provides recommended paths for each theme that can not be associated with a path set according to a user's request.

Even though the path generating system according to the related art provides a recommended path associated with the path to the destination, it has provided a fixed recommended path in which a section can not be changed, such that all users have used a unified recommended path, thereby making it impossible to satisfy users having various tendencies.

Hereinafter, exemplary embodiments of the present invention will be described in detail with reference to the accompanying drawings.

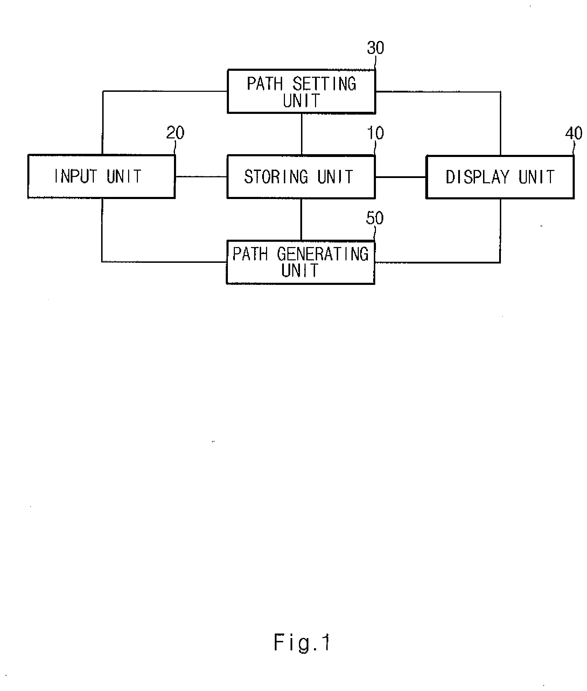

FIG. 1 is a configuration diagram of an SOI-based path generating apparatus according to an exemplary embodiment of the present invention.

As shown in FIG. 1, the SOI-based path generating apparatus according to the exemplary embodiment of the present invention can be configured to include a storing unit 10, an input unit 20, a path setting unit 30, a display unit 40, and a path generating unit 50.

Each of the above-mentioned components will be described. First, the storing unit 10 stores at least one path SOI for each arbitrarily set section. That is, the storing unit 10 stores a path SOI indicating a path between a start point and an arrival point of each arbitrarily set section regardless of a distance, a time, or the like, and the number of path SOIs for each section is at least one.

The path SOI may or may not include information on a relationship with contents. The content can include a blog, a reply, a description, an event, an advertisement, and the like, having a form in which a text, an image, a moving picture, and the like, are provided, respectively, or are combined with each other.

Hereinafter, the meaning of the arbitrarily set section and the number of paths corresponding to the section will be described in detail.

For example, when it is assumed that arbitrary points are A, B, C, and D in a distance sequence, an arbitrary section can be configured of A (a start point) and B (an arrival point), be configured of B (a start point) and C (an arrival point), or be configured of A (a start point) and C (an arrival point). Here, the section configured of A (start point) and C (arrival point) includes B (path point); however, the path point does not have any special meaning.

As described above, each section is arbitrarily set without a special reference.

In addition, each section is divided using various kinds of themes and stored in the storing unit 10. Here, the theme includes a festival, a restaurant, a famous sight, foliage, a sunrise.

Meanwhile, when it is assumed that the section configured of A (the start point) and B (the arrival point) is a first section, the section configured of B (the start point) and C (the arrival point) is a second section, and the section configured of A (the start point) and C (the arrival point) is a third section, the number of path SOIs corresponding to each of the first to third sections is at least one. That is, at least one different path SOI is included for each section.

This path SOI can be generated and uploaded by a user, be generated and uploaded by an operator himself/herself, be generated and uploaded by an external professional agent, or be a computer-generated optimal path (e.g., optimal with respect to distance, travel time, fuel consumption, and the like).

Next, the input unit 20 receives an origination and a destination input from the user.

In addition, the input unit 20 receives a theme selected from the user and receives recommended paths (i.e., path SOIs) selected for each section corresponding to the selected theme.

That is, when the user selects a specific theme through the input unit 20, sections corresponding to the selected theme on a path from an origination to a destination are displayed on the display unit 40 by the path generating unit 50. At this time, the user can select his/her desired path among at least one of the recommended paths provided for each section.

Therefore, the user can select his/her desired paths for each section with respect to sections corresponding to the theme on the path from the origination to the destination.

In the case in which the input unit 20 is implemented in a touch screen, the input unit 20 and the display unit 40 can be implemented as a single module.

Next, the path setting unit 30 sets a main path from an origination to a destination input through the input unit 20 based on the path SOI stored in the storing unit 30. In this case, the path setting unit 30 can set the main path only using section information without considering the theme or can further include a path SOI storing unit having section information that is not associated with the theme to set the main path based on the section information that is not associated with the theme.

In addition, the path setting unit 30 can also set the main path from the origination to the destination using the known technology.

Next, the display unit 40 displays the main path set by the path setting unit 30 on a screen.

In addition, the display unit 40 displays a theme list on the screen to allow the user to select a specific theme.

Further, the display unit 40 displays sections corresponding to the specific theme on the main path when the user selects the specific theme, thereby allowing the user to select a specific section.

In addition, the display unit 40 displays at least one recommended path corresponding to the specific section when the user selects the specific section, thereby allowing the user to select his/her desired recommended path. Here, the recommended path, which is a result of performing a search from the storing unit 10 by the path generating unit 50, is transferred from the path generating unit 50.

This display unit 40 collectively displays the recommended path selected by the user with respect to the section selected by the user in the theme selected by the user, thereby allowing the user to recognize the recommended paths for each section in the theme selected by him/her at a time. That is, the display unit 40 displays a final path generated by the path generating unit 50 on the screen.

Meanwhile, the display unit 40 displays information processed in a multimedia system for a vehicle. For example, in a navigation mode, the display unit 40 displays a user interface (UI) or a graphic user interface (GUI) related to a map, a speed, a direction, a distance indication, or the like, associated with a current position, a destination, a path, or the like, in connection with driving. In a black box mode or a photographing mode, the display unit 40 displays a photographed image, a UI, or a GUI.

The display unit 40 can include at least one of a liquid crystal display (LCD), a thin film transistor-liquid crystal display (TFT LCD), an organic light-emitting diode (OLED), a flexible display, a three-dimensional display (3D display), a dual display displaying different images according to a viewing direction (for example, when a single display is viewed from a driver's seat, a map is viewed, and when it is viewed from a passenger seat, a broadcasting screen is viewed).

Some of these displays can be formed in a transparent type or a light transmitting type so that the outside can be viewed therethrough. This display can be called a transparent display, a typical example of which includes a transparent OLED (TOLED), or the like. A rear structure of the display unit 40 can also be a light transmitting structure.

In the case in which the display unit 40 and a sensor (hereinafter, referred to as a 'touch sensor') sensing a touch operation are formed in a mutual layer structure (hereinafter, referred to as a 'touch screen'), the display unit 40 can be used as an input device in addition to an output device. The touch sensor can have a form such as a touch film, a touch sheet, a touch pad, or the like.

The touch sensor can be configured to convert pressure applied to a specific portion of the display unit 40 or a change in capacitance, or the like, generated in the specific portion of the display unit 40 into an electrical input signal. The touch sensor can be configured to detect pressure at the time of being touched as well as a touched position and area.

Next, the path generating unit 50 searches at least one recommended path (a path SOI) corresponding to the section selected from the user from the storing unit 10 to transfer the searched recommended path to the display unit 40.

In addition, the path generating unit 50 generates the final path based on the recommended paths for each section corresponding to the theme selected from the user through the input unit 20, on the main path set by the path setting unit 30.

That is, the path generating unit 50 generating the final path based on a single recommended path for each section selected from the user among at least one recommended path matched to each section corresponding to the theme selected from the user.

In addition, the path generating unit 50 arbitrarily selects the recommended path with respect to the section that is not selected by the user. Here, in the case in which priority is assigned to each of the recommended paths, the recommended paths are selected based on the priority. In addition, in the case in which the number of recommended paths is one, a selection problem is not generated.

Although the exemplary embodiment of the present invention has described that the path setting unit 30 and the path generating unit 50 are separately implemented, the path setting unit 30 and the path generating unit 50 can also be implemented as a single module by a user's request/selection.

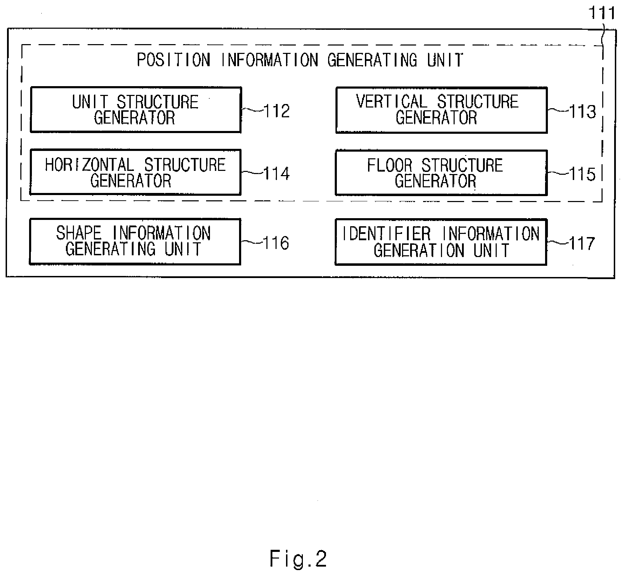

FIG. 2 is a configuration diagram of an SOI information generating apparatus according to an exemplary embodiment of the present invention.

As shown in FIG. 2, the SOI information generating apparatus according to the exemplary embodiment of the present invention is configured to include a position information generating unit 111 generating position information, SOI structure information, SOI combination information, or the like, on a map, a shape information generating unit 116 generating shape information such as dot, line, region information, building information, or the like, on the position information, and an identifier information generating unit 117 generating and assigning identifier information for distinguishing each SOI from each other.

Here, the position information generating unit 111 generates the position information and generates and manages SOIs for the position information. In addition, the position information generating unit 111 manages relationship structure information in the case in which the SOIs are generated to have a relationship structure and manages combination information in the case in which the relationship structures of the SOIs are combined with each other.

The position information generating unit 111 includes a unit relationship structure generator 112 generating and managing one SOI, a vertical relationship structure generator 113 generating and managing a vertical relationship structure of SOIs so that a plurality of SOIs are included in one SOI, a horizontal relationship structure generator 114 generating and managing a horizontal relationship structure of SOIs so that a plurality of SOIs are connected in parallel with each other, and a floor structure generator 115 generating and managing a floor structure of SOIs so that a plurality of SOIs form a floor in one SOI.

The vertical relationship structure generator 113 generates the SOIs in a vertical relationship structure so that at least one other position information can be included in one position information so that at least one lower SOI is positioned in one SOI.

For example, the vertical relationship structure generator 113 can generate the SOI so that a building 1 and a building 2 are included in a region A. That is, the region A is generated as an upper SOI, and each of the building 1 and the building 2 is managed as an upper SOI and a lower SOI.

The horizontal relationship structure generator 114 generates the SOIs in a horizontal relationship structure so that the plurality of SOIs are horizontally positioned without a floor.

For example, the horizontal relationship structure generator 114 can generate the SOI so that a region B, a building 1, and a building 2 are horizontally connected to each other. That is, the region B, the building 1, and the building 2 are generated as the respective SOIs and are managed to be connected to each other.

The floor structure generator 115 generates and manages a plurality of SOIs so that a plurality of floors can be included in one region or a building, that is, so that the plurality of sub SOTs can form a floor of one building (i.e. one SOI).

For example, the floor structure generator 114 can generate the SOI so that the plurality of SOIs form the floor in one building. That is, one building is generated as an upper SOI, each floor is divided into an upper SOI and a lower SOI, and each SOI is separately managed.

The shape information generating unit 116 generates the shape information, which is a substantial image, such as dot, line, region information, building information, or the like, on the position information, and manages the shape information in an SOI unit. For example, the shape information generating unit 116 can image the region in the SOI unit, image a building in the region in the SOI unit, and image a configuration in the building in the SOI unit.

The identifier information generating unit 117 generates and manages the identifier information in the SOI generated according to each structure in the position information generating unit 111. The identifier information generating unit 117 can assign an SOI identifier sign according to one SOI when one SOI is generated, thereby allowing information to be managed in the SOI unit.

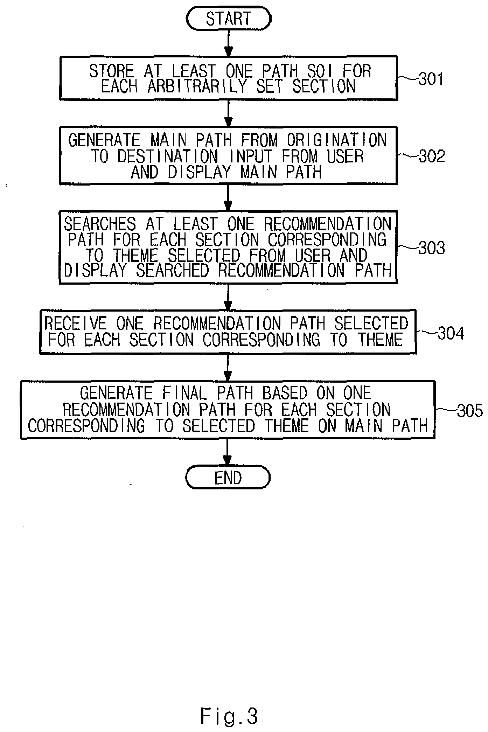

FIG. 3 is a flow chart of an SOI-based path generating method according to an exemplary embodiment of the present invention.

First, the storing unit 10 stores at least one path SOI for each arbitrarily set section (301).

Then, the path setting unit 30 generates a main path from an origination to a destination input from a user through the input unit 20 and then displays the main path through the display unit 20 (302).

Thereafter, the path generating unit 50 searches at least one recommended path for each section corresponding to a theme selected from the user through the input unit 20 from the storing unit 10 and then displays the searched recommended path through the display unit 20 (303).

Next, the input unit 20 receives one recommended path selected for each section corresponding to the theme (304).

Then, the path generating unit 50 generates a final path based on one recommended path for each section corresponding to the theme selected through the input unit 20, on the main path set in the path setting unit 30 (305).

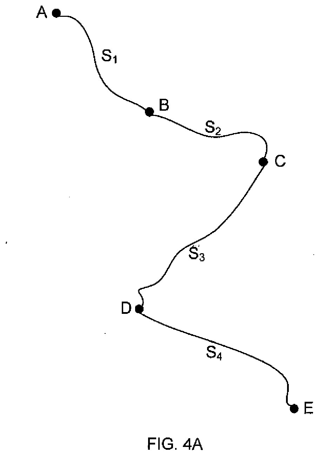

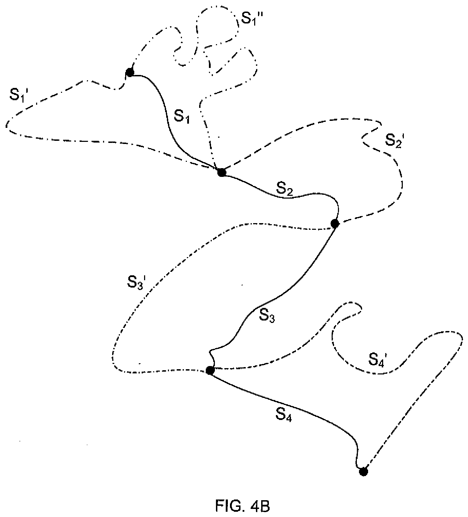

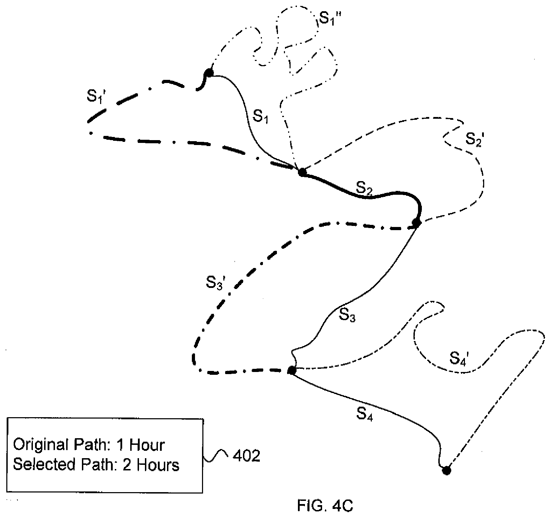

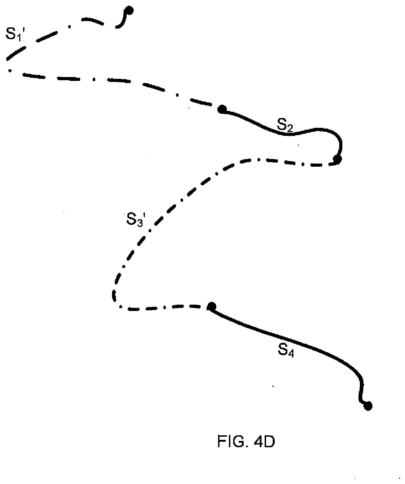

Referring now to FIG. 4, the embodiments of the invention are further illustrated through an example. A user wishes to travel from origination point A to destination point E. A system (e.g., a computer) generates a main path (depicted in solid lines in FIG. 4A). The main path passes through points B, C, and D, which can divide the main path into a plurality of sections S₁, S₂, S₃, and S₄.

After the user selects a theme (*e.g.,* foliage), the system searches a database of paths and proposes one or more paths that are associated with the selected theme. As shown in FIG. 4B, these alternative paths are presented along with the main path so that the user can appreciate how the paths differ and select whether to follow an alternative path.

Referring now to FIG. 4C, a user can select one or more alternative path segments, for example, by clicking on the desired path segments. Selected path segments can be denoted, for example, by a change of color, a change of thickness (as depicted in FIG. 4C), highlighting, and the like. A graphical element 402 can provide a comparison between the duration of the main path and the selected alternative path, for example, in units of distance and/or time.

Referring now to FIG. 4D, once the user completes selection of an alternative path, the user submits the selection (e.g., by pressing a "SUBMIT" button or other graphical element). The system then generates a final path based on the selected paths. In some embodiments, the user need not affirmatively select a desired path for each path section. Rather, sections of the main path can be treated as default sections. For example, the user did not select either path segments S₄ or S₄' in FIG. 4C. Accordingly, default path segment S₄ is utilized in the final path depicted in FIG. 4D.

Although each path section is referred to as a single SOI, it is noted that each section can be further divided into sub-SOIs. Likewise, a user can deviate from the set path at any point (including points along a path) and/or request a new path at any point.

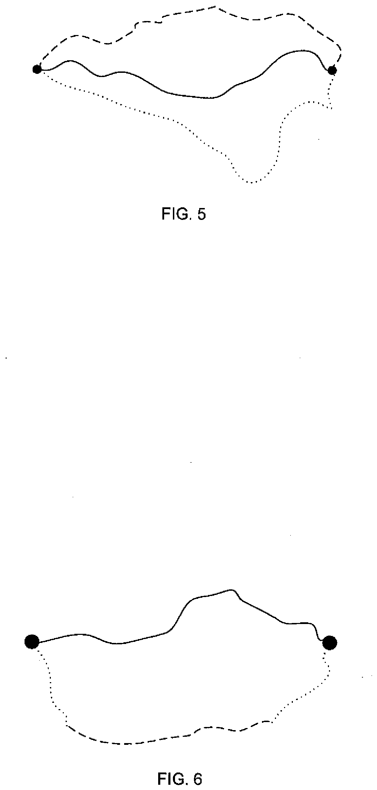

Referring now to FIG. 5, one or more recommended path segments can be presented for a single path segment, which can be one of many segments in a path.

Referring now to FIG. 6, a recommended path segment (depicted as a dashed line) may not be coterminous with any segments along the main path. In such situations, the systems and methods described herein can add extensions to one or both ends of the recommended path segment (depicted as dotted lines) to connect the recommended path segment with other segments along the main path.

Through the above-mentioned process, it is possible to allow the user to select the path for each section in his/her desired theme. Advantageously, a user can select between one or more alternative paths, which can have special features that are not located at a discrete point, but instead are distributed along the path. Moreover, by presenting detours from a main path that eventually return to the main path, the user is provided with more useful information about the total delay associated with taking an alternative route.

As set forth above, according to the exemplary embodiments of the present invention, the main path corresponding to the origination and the destination input from the user is set and at least one recommended path for each section corresponding to a specific theme is provided in the case in which the user selects the specific theme, thereby making it possible to allow the user to select the paths for each section in his/her desired theme.

Although preferred embodiments of the present invention have been described for illustrative purposes, those skilled in the art will appreciate that various modifications, additions and substitutions are possible, without departing from the scope of the invention as disclosed in the accompanying claims.

### SYMBOL OF EACH OF THE ELEMENTS IN THE FIGURES

FIG. 1
   - 10:: STORING UNIT
   - 20:: INPUT UNIT
   - 30:: PATH SETTING UNIT
   - 40:: DISPLAY UNIT
   - 50:: PATH GENERATING UNIT
FIG. 2
   - 111:: position information GENERATING UNIT
   - 112:: unit structure GENERATOR
   - 113:: vertical structure GENERATOR
   - 114:: horizontal structure GENERATOR
   - 115:: FLOOR STRUCTURE GENERATOR
   - 116:: shape information GENERATING UNIT
   - 117:: identifier information GENERATING UNIT

## Claims

1. A method for generating a path, comprising:
storing, in a storing unit (10), at least one path for each arbitrarily set section among a plurality of sections, wherein each section is configured with an arbitrary start point and an arbitrary end point and wherein each stored section is divided using themes and themes include a festival, a restaurant, a famous sight, a foliage or a sunrise;
setting, in a path setting unit (30), a main path having one of the plurality of sections from an origin to a destination input from a user and then displaying the main path through a display unit (40) for displaying information processed in a multimedia system for a vehicle;
searching, in a path generating unit (50), for at least one alternative path for one or more of the plurality of sections corresponding to a theme selected by the user;
displaying the at least one searched alternative path along with the main path through the display unit (40);
receiving, in an input unit (20), a selection of one or more of the at least one alternative path displayed by the display unit (40), by the user, for one or more of the plurality of sections;
displaying, by the display unit (40), the alternative path selected by the user and a comparison between a duration of the main path and the selected alternative path; and
generating, in the path generating unit (50), a final path based on the selection of the one or more alternative path for the one or more sections; and
displaying, in the display unit (40), the final path generated by the path generating unit (50).

2. The method of claim 1, wherein in the step of generating of the final path, each of the sections of the main path is arbitrarily selected for inclusion in the final path where the at least one alternative path was not selected by the user for the corresponding section.

3. The method of claim 1, wherein in the setting of the main path step, the main path is set based on previously-stored paths.

4. The method of claim 1, wherein in the storing step, paths uploaded by other users are stored.

5. The method of claim 1, wherein the main path is initially set in the setting step as an optimal path from the origin to the destination.

6. The method of claim 5, wherein the optimal path minimizes one or more selected from the group consisting of: distance, travel time, and fuel consumption.

7. The method of claim 1, wherein the at least one alternative path for each section is displayed in the searching step concurrently with the corresponding section from the main path proposed in the setting step.

8. The method of claim 7, wherein a degree of deviation from the main path proposed in the setting step to the at least one alternative path for each of the sections is displayed.

9. The method of claim 8, wherein the degree of deviation is expressed in terms of one or more selected from the group consisting of: distance, travel time, and fuel consumption.

10. The method of claim 8, wherein the at least one alternative path is extended to connect with one or more other sections.

11. An apparatus for generating path, the apparatus comprising:
a storing unit (10) configured for storing at least one path for each arbitrarily set section among a plurality of sections, wherein each section is configured with an arbitrary start point and an arbitrary end point and wherein each stored section is divided using themes and themes include a festival, a restaurant, a famous sight, a foliage or a sunrise;
an input unit (20) configured for receiving an origin and a destination input from a user, receiving a theme selected by the user, and receiving a selection of one or more of at least one alternative path displayed by the display unit (40), by the user, for one or more of the plurality of sections corresponding to the selected theme from the user;
a path setting unit (30) configured for setting a main path having the plurality of sections from the origin to the destination input through the input unit (20), wherein the main path is divided into the plurality of sections;
a display unit (40) for displaying information processed in a multimedia system for a vehicle, wherein the display unit (40) is configured for displaying the main path set by the path setting unit (30), a theme list, each of the sections corresponding to the selected theme by the user , and the at least one alternative path corresponding to each section; and
a path generating unit (50) configured for searching for the at least one alternative path in the plurality of sections corresponding to the selected theme from the storing unit (10) to transfer the at least one alternative path to the display unit (40), and generating a final path based on the selection of the one or more alternative paths for each section corresponding to the theme selected through the input unit (20), on the main path set by the path setting unit (30),
wherein the display unit (40) further performs a function of displaying the alternative path selected by the user along with the main path,
a comparison between a duration of the main path and the selected alternative path, and the final path generated by the path generating unit (50).

12. The apparatus of claim 11, wherein the path generating unit (50) arbitrarily selects each of the sections of the main path for inclusion in the final path where the at least one alternative path was not selected by the user for the corresponding section.

13. The apparatus of claim 11, wherein the path setting unit (30) sets the main path based on paths previously-stored in the storing unit (10).

14. The apparatus of claim 11, wherein the storing unit (10) stores paths uploaded by other users.

15. The apparatus of claim 11, wherein the path setting unit (30) is further configured to initially set the main path as an optimal path from the origin to the destination.

16. The apparatus of claim 15, wherein the optimal path minimizes one or more selected from the group consisting of: distance, travel time, and fuel consumption.

17. The apparatus of claim 11, wherein the display unit (40) is further configured to display at least one alternative path for each section concurrently with the corresponding section from the main path proposed in the setting step.

18. The apparatus of claim 17, wherein the display unit (40) is further configured to display a degree of deviation from the main path to the at least one alternative path for each of the sections.

## Patentansprüche

1. Verfahren zum Generieren eines Pfades, umfassend:
Speichern, in einer Speichereinheit (10), mindestens eines Pfades für jeden willkürlich eingestellten Abschnitt unter mehreren Abschnitten, wobei jeder Abschnitt mit einem willkürlichen Startpunkt und einem willkürlichen Endpunkt ausgebildet ist und wobei jeder gespeicherte Abschnitt unter Verwendung von Themen unterteilt ist und die Themen eine Feierlichkeit, ein Restaurant, eine berühmte Sehenswürdigkeit, ein Blattwerk oder einen Sonnenaufgang umfassen;
Einstellen, in einer Pfadeinstelleinheit (30), eines Hauptpfades, der einen der mehreren Abschnitte aufweist, von einem Ursprung zu einem Ziel, die von einem Benutzer eingegeben wurden, und anschließendes Anzeigen des Hauptpfades über eine Anzeigeeinheit (40) zum Anzeigen von Informationen, die in einem Multimediasystem für ein Fahrzeug verarbeitet wurden;
Suchen, in einer Pfadgenerierungseinheit (50), nach mindestens einem alternativen Pfad für einen oder mehrere der mehreren Abschnitte, die einem durch den Benutzer ausgewählten Thema entsprechen;
Anzeigen des mindestens einen gesuchten alternativen Pfades zusammen mit dem Hauptpfad über die Anzeigeeinheit (40);
Empfangen, in einer Eingabeeinheit (20), einer Auswahl eines oder mehrerer des mindestens einen alternativen Pfades, die durch die Anzeigeeinheit (40) angezeigt werden,
durch den Benutzer für einen oder mehrere der mehreren Abschnitte;
Anzeigen, durch die Anzeigeeinheit (40), des durch den Benutzer ausgewählten alternativen Pfades und eines Vergleichs zwischen einer Dauer des Hauptpfades und des ausgewählten alternativen Pfades; und
Generieren, in der Pfadgenerierungseinheit (50), eines endgültigen Pfades auf der Grundlage der Auswahl des einen oder der mehreren alternativen Pfade für den einen oder die mehreren Abschnitte; und
Anzeigen, in der Anzeigeeinheit (40), des durch die Pfadgenerierungseinheit (50) generierten endgültigen Pfades.

2. Verfahren nach Anspruch 1, wobei in dem Schritt des Generierens des endgültigen Pfades jeder der Abschnitte des Hauptpfades willkürlich zur Aufnahme in den endgültigen Pfad ausgewählt wird, wenn der mindestens eine alternative Pfad nicht durch den Benutzer für den entsprechenden Abschnitt ausgewählt wurde.

3. Verfahren nach Anspruch 1, wobei in dem Hauptpfad-Einstellschritt der Hauptpfad auf der Grundlage zuvor gespeicherter Pfade eingestellt wird.

4. Verfahren nach Anspruch 1, wobei in dem Speicherschritt Pfade gespeichert werden, die durch andere Nutzer hochgeladen wurden.

5. Verfahren nach Anspruch 1, wobei der Hauptpfad in dem Einstellschritt zunächst als ein optimaler Pfad von dem Ursprung zu dem Ziel eingestellt wird.

6. Verfahren nach Anspruch 5, wobei der optimale Pfad eines oder mehrere minimiert, die ausgewählt sind aus der Gruppe bestehend aus Entfernung, Fahrzeit und Kraftstoffverbrauch.

7. Verfahren nach Anspruch 1, wobei der mindestens eine alternative Pfad für jeden Abschnitt in dem Suchschritt gleichzeitig mit dem entsprechenden Abschnitt aus dem in dem Einstellschritt vorgeschlagenen Hauptpfad angezeigt wird.

8. Verfahren nach Anspruch 7, wobei ein Grad der Abweichung von dem in dem Einstellschritt vorgeschlagenen Hauptpfad zu dem mindestens einen Alternativpfad für jeden der Abschnitte angezeigt wird.

9. Verfahren nach Anspruch 8, wobei der Grad der Abweichung im Hinblick auf eines oder mehrere ausgedrückt wird, die ausgewählt sind aus der Gruppe bestehend aus Entfernung, Fahrzeit und Kraftstoffverbrauch.

10. Verfahren nach Anspruch 8, wobei der mindestens eine alternative Pfad erweitert wird, um mit einem oder mehreren anderen Abschnitten verbunden zu werden.

11. Vorrichtung zum Generieren eines Pfades, wobei die Vorrichtung umfasst:
eine Speichereinheit (10), die dafür ausgebildet ist, mindestens einen Pfad für jeden willkürlich eingestellten Abschnitt unter mehreren Abschnitten zu speichern, wobei jeder Abschnitt mit einem willkürlichen Startpunkt und einem willkürlichen Endpunkt ausgebildet ist und wobei jeder gespeicherte Abschnitt unter Verwendung von Themen unterteilt ist und die Themen eine Feierlichkeit, ein Restaurant, eine berühmte Sehenswürdigkeit, ein Blattwerk oder einen Sonnenaufgang umfassen;
eine Eingabeeinheit (20), die dafür ausgebildet ist, einen Ursprung und ein Ziel, die von einem Benutzer eingegeben wurden, zu empfangen, ein durch den Benutzer ausgewähltes Thema zu empfangen, und eine durch den Benutzer getroffene Auswahl eines oder mehrerer von mindestens einem alternativen Pfad, der durch die Anzeigeeinheit (40) angezeigt wird, für einen oder mehrere der mehreren Abschnitte, die dem ausgewählten Thema entsprechen, von dem Benutzer zu empfangen;
eine Pfadeinstelleinheit (30), die dafür ausgebildet ist, einen Hauptpfad, der die mehreren Abschnitte aufweist, von dem Ursprung zu dem Ziel, die über die Eingabeeinheit (20) eingegeben wurden, einzustellen, wobei der Hauptpfad in die mehreren Abschnitte unterteilt ist;
eine Anzeigeeinheit (40) zum Anzeigen von Informationen, die in einem Multimediasystem für ein Fahrzeug verarbeitet werden, wobei die Anzeigeeinheit (40) dafür ausgebildet ist, den durch die Pfadeinstelleinheit (30) eingestellten Hauptpfad, eine Themenliste, jeden der Abschnitte, die dem durch den Benutzer ausgewählten Thema entsprechen, und den mindestens einen alternativen Pfad, der jedem Abschnitt entspricht, anzuzeigen; und
eine Pfadgenerierungseinheit (50), die dafür ausgebildet ist, den mindestens einen alternativen Pfad in den mehreren Abschnitten, die dem ausgewählten Thema entsprechen, aus der Speichereinheit (10) zu suchen, um den mindestens einen alternativen Pfad an die Anzeigeeinheit (40) zu übertragen, und einen endgültigen Pfad auf der Grundlage der Auswahl des einen oder der mehreren alternativen Pfade für jeden Abschnitt, der dem über die Eingabeeinheit (20) ausgewählten Thema entspricht, auf dem durch die Pfadeinstelleinheit (30) eingestellten Hauptpfad zu generieren,
wobei die Anzeigeeinheit (40) des Weiteren eine Funktion ausführt, den durch den Benutzer ausgewählten alternativen Pfad zusammen mit dem Hauptpfad, einen Vergleich zwischen einer Dauer des Hauptpfades und des ausgewählten alternativen Pfades und den durch die Pfadgenerierungseinheit (50) generierten endgültigen Pfad anzuzeigen.

12. Vorrichtung nach Anspruch 11, wobei die Pfadgenerierungseinheit (50) jeden der Abschnitte des Hauptpfades willkürlich zur Aufnahme in den endgültigen Pfad auswählt, wenn der mindestens eine alternative Pfad nicht durch den Benutzer für den entsprechenden Abschnitt ausgewählt wurde.

13. Vorrichtung nach Anspruch 11, wobei die Pfadeinstelleinheit (30) den Hauptpfad auf der Grundlage von in der Speichereinheit (10) zuvor gespeicherten Pfaden einstellt.

14. Vorrichtung nach Anspruch 11, wobei die Speichereinheit (10) Pfade speichert, die durch andere Nutzer hochgeladen wurden.

15. Vorrichtung nach Anspruch 11, wobei die Pfadeinstelleinheit (30) des Weiteren dafür ausgebildet ist, anfänglich den Hauptpfad als einen optimalen Pfad von dem Ursprung zu dem Ziel einzustellen.

16. Vorrichtung nach Anspruch 15, wobei der optimale Pfad eines oder mehrere minimiert, die ausgewählt sind aus der Gruppe bestehend aus Entfernung, Fahrzeit und Kraftstoffverbrauch.

17. Vorrichtung nach Anspruch 11, wobei die Anzeigeeinheit (40) des Weiteren dafür ausgebildet ist, mindestens einen alternativen Pfad für jeden Abschnitt gleichzeitig mit dem entsprechenden Abschnitt von dem in dem Einstellschritt vorgeschlagenen Hauptpfad anzuzeigen.

18. Vorrichtung nach Anspruch 17, wobei die Anzeigeeinheit (40) des Weiteren dafür ausgebildet ist, einen Grad der Abweichung von dem Hauptpfad zu dem mindestens einen alternativen Pfad für jeden der Abschnitte anzuzeigen.

## Revendications

1. Procédé pour générer un chemin, comprenant de :
stocker, dans une unité de stockage (10), au moins un chemin pour chaque tronçon défini arbitrairement parmi une pluralité de tronçons, dans lequel chaque tronçon est configuré avec un point de début arbitraire et un point de fin arbitraire et dans lequel chaque tronçon stocké est divisé en utilisant des thèmes et les thèmes incluent un festival, un restaurant, un point vue célèbre, un feuillage ou un lever de soleil ;
définir, dans une unité de définition de chemin (30), un chemin principal ayant un tronçon de la pluralité de tronçons d'une origine à une destination entrées à partir d'un utilisateur et afficher ensuite le chemin principal via une unité d'affichage (40) pour afficher des informations traitées dans un système multimédia pour un véhicule ;
rechercher, dans une unité de génération de chemin (50), au moins un chemin alternatif pour un ou plusieurs tronçons de la pluralité de tronçons correspondant à un thème sélectionné par l'utilisateur ;
afficher le au moins un chemin alternatif recherché ainsi que le chemin principal via l'unité d'affichage (40) ;
recevoir, dans une unité d'entrée (20), une sélection d'un ou plusieurs des au moins un chemin alternatif affiché par l'unité d'affichage (40), par l'utilisateur, pour un ou plusieurs tronçons de la pluralité de tronçons ;
afficher, par l'unité d'affichage (40), le chemin alternatif sélectionné par l'utilisateur et une comparaison entre une durée du chemin principal et le chemin alternatif sélectionné ; et
générer, dans l'unité de génération de chemin (50), un chemin final basé sur la sélection du ou des chemins alternatifs pour le ou les tronçons ; et
afficher, dans l'unité d'affichage (40), le chemin final généré par l'unité de génération de chemin (50).

2. Procédé selon la revendication 1, dans lequel à l'étape de génération du chemin final, chacun des tronçons du chemin principal est sélectionné arbitrairement pour une inclusion dans le chemin final là où le au moins un chemin alternatif n'a pas été sélectionné par l'utilisateur pour le tronçon correspondant.

3. Procédé selon la revendication 1, dans lequel à l'étape de définition du chemin principal, le chemin principal est défini sur la base de chemins précédemment stockés.

4. Procédé selon la revendication 1, dans lequel à l'étape de stockage, des chemins téléchargés par d'autres utilisateurs sont stockés.

5. Procédé selon la revendication 1, dans lequel le chemin principal est initialement défini à l'étape de définition sous la forme d'un chemin optimal de l'origine à la destination.

6. Procédé selon la revendication 5, dans lequel le chemin optimal minimise un ou plusieurs éléments choisis parmi le groupe constitué par une distance, un temps de parcours, et une consommation de carburant.

7. Procédé selon la revendication 1, dans lequel le au moins un chemin alternatif pour chaque tronçon est affiché à l'étape de recherche simultanément avec le tronçon correspondant provenant du chemin principal proposé à l'étape de définition.

8. Procédé selon la revendication 7, dans lequel un degré de déviation par rapport au chemin principal proposé à l'étape de définition par rapport au au moins un chemin alternatif pour chacun des tronçons est affiché.

9. Procédé selon la revendication 8, dans lequel le degré de déviation est exprimé en termes d'un ou plusieurs éléments choisis parmi le groupe constitué par une distance, un temps de parcours, et une consommation de carburant.

10. Procédé selon la revendication 8, dans lequel le au moins un chemin alternatif est étendu pour se raccorder à un ou plusieurs autres tronçons.

11. Appareil pour générer un chemin, l'appareil comprenant :
une unité de stockage (10) configurée pour stocker au moins un chemin pour chaque tronçon défini arbitrairement parmi une pluralité de tronçons, dans lequel chaque tronçon est configuré avec un point de début arbitraire et un point de fin arbitraire et dans lequel chaque tronçon stocké est divisé en utilisant des thèmes et les thèmes incluent un festival, un restaurant, un point de vue célèbre, un feuillage ou un lever de soleil ;
une unité d'entrée (20) configurée pour recevoir une origine et une destination entrées à partir d'un utilisateur, recevoir un thème sélectionné par l'utilisateur, et recevoir une sélection d'un ou plusieurs chemins parmi au moins un chemin alternatif affiché par l'unité d'affichage (40), par l'utilisateur, pour un ou plusieurs tronçons de la pluralité de tronçons correspondant au thème sélectionné à partir de l'utilisateur ;
une unité de définition de chemin (30) configurée pour définir un chemin principal ayant la pluralité de tronçons de l'origine à la destination entrées via l'unité d'entrée (20), dans lequel le chemin principal est divisé en la pluralité de tronçons ;
une unité d'affichage (40) pour afficher des informations traitées dans un système multimédia pour un véhicule, dans lequel l'unité d'affichage (40) est configurée pour afficher le chemin principal défini par l'unité de définition de chemin (30), une liste de thèmes, chacun des tronçons correspondant au thème sélectionné par l'utilisateur, et le au moins un chemin alternatif correspondant à chaque tronçon ; et
une unité de génération de chemin (50) configurée pour rechercher le au moins un chemin alternatif dans la pluralité de tronçons correspondant au thème sélectionné à partir de l'unité de stockage (10) pour transférer le au moins un chemin alternatif à l'unité d'affichage (40), et générer un chemin final basé sur la sélection du ou des chemins alternatifs pour chaque tronçon correspondant au thème sélectionné via l'unité d'entrée (20), sur le chemin principal défini par l'unité de définition de chemin (30), dans lequel l'unité d'affichage (40) exécute en outre une fonction d'affichage du chemin alternatif sélectionné par l'utilisateur ainsi que le chemin principal, une comparaison entre une durée du chemin principal et le chemin alternatif sélectionné, et le chemin final généré par l'unité de génération de chemin (50).

12. Appareil selon la revendication 11, dans lequel l'unité de génération de chemin (50) sélectionne arbitrairement chacun des tronçons du chemin principal pour une inclusion dans le chemin final là où le au moins un chemin alternatif n'a pas été sélectionné par l'utilisateur pour le tronçon correspondant.

13. Appareil selon la revendication 11, dans lequel l'unité de définition de chemin (30) définit le chemin principal sur la base de chemins précédemment stockés dans l'unité de stockage (10).

14. Appareil selon la revendication 11, dans lequel l'unité de stockage (10) stocke des chemins téléchargés par d'autres utilisateurs.

15. Appareil selon la revendication 11, dans lequel l'unité de définition de chemin (30) est en outre configurée pour définir initialement le chemin principal comme un chemin optimal de l'origine à la destination.

16. Appareil selon la revendication 15, dans lequel le chemin optimal minimise un ou plusieurs éléments choisis parmi le groupe constitué par une distance, un temps de parcours, et une consommation de carburant.

17. Appareil selon la revendication 11, dans lequel l'unité d'affichage (40) est en outre configurée pour afficher au moins un chemin alternatif pour chaque tronçon simultanément avec le tronçon correspondant provenant du chemin principal proposé à l'étape de définition.

18. Appareil selon la revendication 17, dans lequel l'unité d'affichage (40) est en outre configurée pour afficher un degré de déviation par rapport au chemin principal jusqu'au au moins un chemin alternatif pour chacun des tronçons.
